# EUROPÄISCHE PATENTANMELDUNG

(11) **EP 4 572 025 A1**
(43) Veröffentlichungstag der Anmeldung: **18.06.2025**
(21) Anmeldenummer: 24218018.0
(22) Anmeldetag: 06.12.2024
(51) Int. Cl.: H01R 9/05, H01R 24/52, H02G 3/00, H01R 103/00

(54) **ELEKTRISCHEN STECKVERBINDER UND STECKVERBINDERSYSTEM**

(30) Priorität: 13.12.2023 DE 102023134975
(71) Anmelder: HARTING Electric Stiftung & Co. KG, 32339 Espelkamp (DE)
(72) Erfinder: Krause, Jens, 32339 Espelkamp (DE)
(74) Vertreter: Eisenführ Speiser

(57) **Zusammenfassung**

Die Erfindung geht aus von einem elektrischen Steckverbinder zur Aufnahme und Verbindung zumindest einer koaxialen Leitung mit einem Gegensteckverbinder, wobei der Steckverbinder ein Steckverbindergehäuse und eine daran angeordnete Leitungsbefestigung aufweist. Die Leitungsbefestigung interagiert zur Abdichtung gegenüber Fremdmedien, sowie zur Befestigung der Leitung mit einem Mantel der Leitung, wobei ein in dem Steckverbinder angeordnetes Kontaktelement mit einem Innenleiter der Leitung elektrisch leitend verbunden ist. Im Innenraum des Steckverbindergehäuses ist ein Außenleiter der Leitung mit dem Steckverbindergehäuse elektrisch leitend verbunden. Der Innenleiter ist im Innenraum des Steckverbindergehäuses von zumindest einer Fixiervorrichtung kraftschlüssig aufgenommen.

## Beschreibung

Die Erfindung geht aus von einem elektrischen Steckverbinder und einem diesen Steckverbinder aufweisenden Steckverbindersystem nach der Gattung der unabhängigen Ansprüche 1 und 14.

Derartige Steckverbindersysteme werden benötigt, um entweder Signale und Daten bestenfalls frei von elektromagnetischen Störungen zu übertragen, oder bei hoher Stromübertragung die Beeinflussung anderer elektrischer und/oder elektronischer Geräte zu vermindern. Dabei können umgebungsbedingt besondere Anforderungen an die Robustheit des Gehäuses und der sicheren elektrischen Verbindung gestellt sein. Insbesondere wird im Bereich schienengebundener Fahrzeuge auf kompakte und gleichzeitig robuste Ausführung der Steckverbinder und diese Steckverbinder aufweisende Steckverbindersysteme geachtet.

### Stand der Technik

Die CN 206 516 824 U zeigt einen vergleichbaren Steckverbinder, eingesetzt in einem Steckverbindersystem, welcher für den Einsatz in rauer Umgebung konzipiert ist, und zur Befestigung der Komponenten an einer Montageschiene sowohl innerhalb, als auch außerhalb einer Vorrichtung, vorzugsweise eines Hochgeschwindigkeitszuges, einsetzbar ist.

Als nachteilig hat sich bei derartigen Steckverbindersystemen zur Verbindung von Koaxialkabeln herausgestellt, dass insbesondere beim Einsatz geschirmter elektrischer Leiter eine reguläre Leitungsbefestigung, üblicherweise umgesetzt durch im Stand der Technik bekannte Kabelverschraubungen, bei den eingesetzten elektrischen Leitern nicht hinreichend ist, um die Leiter und die damit verbundenen Kontakte gegen Vibration, Rotation und Zugkräften zu sichern. Diese Problematik

### Aufgabenstellung

Die Aufgabe der Erfindung besteht darin, einen Steckverbinder anzubieten, welches eine verbesserte Aufnahme von koaxialen Leitungen ermöglicht.

Weiter ist eine Aufgabe der Erfindung die Eröffnung eines Steckverbindersystems welches unter Verwendung des erfindungsgemäßen Steckverbinders die Aufnahme koaxialer Leitungen verbessert.

Die Aufgabe wird durch die Gegenstände der unabhängigen Ansprüche 1 und 14 gelöst.

Vorteilhafte Ausgestaltungen der Erfindung sind in den Unteransprüchen und der folgenden Beschreibung angegeben.

Die Erfindung geht aus von einem elektrischen Steckverbinder zur Aufnahme und Verbindung zumindest einer koaxialen Leitung mit einem Gegensteckverbinder, wobei der Steckverbinder ein Steckverbindergehäuse und eine daran angeordnete Leitungsbefestigung aufweist. Die Leitungsbefestigung interagiert zur Abdichtung gegenüber Fremdmedien, sowie zur Befestigung der Leitung mit einem Mantel der Leitung, wobei ein in dem Steckverbinder angeordnetes Kontaktelement mit einem Innenleiter der Leitung elektrisch leitend verbunden ist. Im Innenraum des Steckverbindergehäuses ist ein Außenleiter der Leitung mit dem Steckverbindergehäuse elektrisch leitend verbunden. Der Innenleiter ist im Innenraum des Steckverbindergehäuses von zumindest einer Fixiervorrichtung kraftschlüssig aufgenommen. Vorzugsweise wird der Innenleiter dabei auf einer ihn umgebenden Trennschicht fixiert. Alternativ nimmt die Fixiervorrichtung den Innenleiter in abisoliertem Zustand auf.

Die Begriffe "Steckverbinder" und "Gegensteckverbinder" können grundsätzlich synonym verwendet werden und wurden gewählt, um eine Unterscheidung zu vereinfachen. Dabei können selbstverständlich gleichartige oder verschiedenartige Bauteile in den verschiedenen Steckverbindern eingesetzt werden und dennoch mit denselben Begriffen passend umschrieben sein.

Als "Leitungsbefestigung" ist eine Einrichtung zu verstehen, welche die koaxiale Leitung zumindest an einem Mantel hält, befestigt. Vorzugsweise ist die Leitungsbefestigung weiterhin dazu ausgelegt, das Steckverbindergehäuse gegen das Eindringen von Fremdmedien, beispielsweise Schmutz, Staub und/oder Fluiden zu schützen. Derartige Leitungsbefestigungen werden auch als Kabelverschraubung bezeichnet. Die Leitungsbefestigung wird weiterhin zur Zugentlastung genutzt. Damit wird die Leitung, wie die Bezeichnung suggeriert, insbesondere vor versehentliche Belastung auf Zug, aber auch Druck, Vibration und bis zu einem gewissen Grad auch vor Rotation geschützt, beziehungsweise entlastet.

Der Begriff "Kontaktelement" meint zunächst ein als Buchsenkontakt ausgeführtes Kontaktelement. Ebenso kann ein Kontaktelement als Stiftkontakt ausgeführt sein. Darüber hinaus kann ein Kontaktelement als ein Messerkontakt gebildet sein. Dazu korrespondierend kann ein Kontaktelement als ein Federkontakt vorgesehen sein. Geschickter Weise ist ein Kontaktelement als Teil eines gleichpaarigen Kontaktes gebildet, also als Kontakt, welches mit einem zweiten Kontakt gleicher Bauart verbindbar ausgeführt ist.

Als "Fixiervorrichtung" ist ein Bauteil zu verstehen, welches dazu ausgelegt ist, zumindest einen Teils des Innenleiters innerhalb des Verbindereinschubs zu befestigen. Auf diese Weise wird die Leitungsbefestigung erweitert und verbessert. Weiterhin wird hiermit ein verbesserter Schutz vor Bewegungen wie Zug, Druck, Rotation und Vibration erreicht. Bei koaxialen Leitungen ist der Innenleiter, auch als Mittelleiter oder Seele bezeichnet, in einer dielektrischen Trennschicht eingehüllt. Die Trennschicht trennt den Innenleiter vom Außenleiter. Oftmals ist, aus Gründen der verbesserten Flexibilität, der Innenleiter beweglich in der Trennschicht eingebracht. Durch die Fixiervorrichtung wird der Innenleiter besonders gesichert. Diese zusätzliche Sicherheit ist bei Aderquerschnitten ab 6 mm² vorteilhaft, da ein Innenleiter mit derartigen Aderquerschnitt in der Lage ist, Kontaktaufnahmen und/oder Kontaktelemente bei übermäßiger Belastung zu beschädigen oder sogar zu zerstören. Besonders vorteilhaft ist die zusätzliche Sicherheit bei Aderquerschnitten, welche insbesondere bei der Versorgung von Fahrantrieben, ganz besonders im Bereich der schienengeführten Fahrzeuge, wünschenswert und sinnvoll. Aderquerschnitte können in diesen Bereichen größergleich 20 mm², oftmals größergleich 50 mm², auch größergleich 95 mm², theoretisch sogar größergleich 240 mm² annehmen.

Der erfindungsgemäße Steckverbinder ist daher besonders geeignet, Leitungen für die Übertragung hoher elektrischer Ströme und/oder hoher elektrischer Spannungen aufzunehmen und durch die Fixiervorrichtung vor Beschädigung zu Schützen.

Als "hohe elektrischer Strom" ist eine Stromstärke von über 50 Ampere gemeint. Insbesondere ist eine Stromstärke von über 200 Ampere gemeint. Ganz besonders ist eine Stromstärke von über 500 Ampere gemeint. Denkbar ist auch eine Stromstärke von größergleich 1.000 Ampere.

Unter dem Begriff "hohe elektrische Spannung" ist eine Spannung von über 1 Kilovolt zu verstehen. Insbesondere ist eine Spannung von über 10 Kilovolt gemeint. Ganz besonders ist eine Spannung von über 15 Kilovolt gemeint. Denkbar ist auch eine Stromstärke von größergleich 25 Kilovolt.

Eine weitere Ausführungsform sieht vor, dass die Fixiervorrichtung zumindest ein Fixierelement und ein Klemmelement aufweist und das Klemmelement zumindest eine Leiteraufnahme aufweist. Als Fixierelement sei vorzugsweise ein Bauteil gemeint, welches zur Verbindung und Befestigung des Klemmelements eingerichtet ist.

Als "Klemmelement" ist ein Bauteil zu verstehen, welches die Leitung, insbesondere den Innenleiter der Leitung, derart aufnimmt, dass eine Bewegung des Innenleiters verringert, vorzugsweise verhindert wird. Dadurch sollen besonders Zugbewegungen, aber auch Druckbewegungen des Innenleiters auf das Kontaktelement verhindert werden. Weiterhin sollen Vibrationen und Rotationsbewegungen verringert, bestenfalls verhindert werden.

Eine besonders robuste Ausführungsform sieht vor, dass das Fixierelement zumindest eine Eingriffsform und das Klemmelement zumindest ein Eingriffselement aufweist, welche im montierten Zustand in Eingriff stehen. Ähnlich wie die Begriffe Steckverbinder und Gegensteckverbinder können die Begriffe "Eingriffsform" und "Eingriffselement" im Sinne der Erfindung synonym verwendet werden und werden vorzugsweise zur einfacheren Lesbarkeit und Zuordnung genutzt. So können Beide Begriffe für miteinander korrespondierende, beziehungsweise in Eingriff bringbare Elemente stehen. Vorzugsweise werden hier Nuten und Federn als Elemente genutzt, wobei je eines der genannten Elemente, Nut oder Feder, an dem Klemmelement angeordnet ist und das damit in Eingriff bringbare Element Feder oder Nut an dem Fixierelement angeordnet ist. Vorzugsweise weist das Fixierelement eine Öffnung auf, in welche eine Anformung des Klemmelements eingebracht wird. Besonders vorteilhaft ist eine Durchgangsöffnung an dem Fixierelement vorgesehen, in/durch welches eine in etwa kongruente Anformung des Klemmelements zumindest teilweise hinein, beziehungsweise heraus ragt. Ganz besonders bevorzugt ist das Fixierelement mit einem Langloch oder einem Schlitz ausgeführt, in welches ein grundsätzlich kongruenter Vorsprung des Klemmelements eingreift.

In einer Ausführungsform ist dem Steckverbindergehäuse ein Gehäusedeckel zugeordnet, welcher zur Aufnahme der Leitungsbefestigung und zum Schutz des Steckverbinders vor Eindringen von Fremdmedien mit zumindest einem Dichtelement ausgeführt. Auf diese Weise kann der Einsatz des Steckverbindersystems im Außenbereich, insbesondere im Außenbereich eines schienengebundenen Fahrzeugs gut und sicher vorgesehen werden.

In einer weiteren Ausführungsform ist der Gehäusedeckel mit zumindest vier Befestigungsformen zur Befestigung mit dem Steckverbinder und zumindest einer Durchgangsöffnung ausgeführt, welche zur Aufnahme einer Leitungsbefestigung ausgeführt ist. In der einfachsten Form können die Befestigungsformen bereits als Durchgangsöffnungen vorgesehen sein, welche die Befestigung des Gehäusedeckels an dem Steckverbinder durch Schrauben, Bolzen, Nieten, Rasthaken oder ähnliche sichere und günstige Befestigungselemente ermöglicht. Die ursprünglich genannte Durchgangsöffnung kann zunächst als einfache kreisrunde Auslassung ausgeführt werden, durch die eine Leitungsbefestigung, vorzugsweise in Form einer Kabelverschraubung oder eine vergleichbaren Kabelfixierung durchgeführt und befestigt werden kann. In geschickter Weise kann die Durchgangsöffnung mit einem Gewinde versehen werden, in welche eine Kabelverschraubung direkt eingeschraubt werden kann. Auf diese Weise kann durch weitere Befestigungsmittel, wie eine Mutter zur Befestigung einer Kabelverschraubung verzichtet werden.

In einer besonders robusten Ausführungsform ist vorgesehen, dass der Gehäusedeckel Teil eines Verbindereinschubs ist, welcher weiterhin zumindest ein Distanzelement und einen Kontaktbereich aufweist.

Als "Kontaktbereich" ist ein Bereich des Verbindereinschubs gemeint, in dem die Kontaktelemente des Steckverbinders angeordnet sind. Der Kontaktbereich kann besonders vorteilhaft aus weiteren Bauteilen bestehen. Hier werden vorrangig eine Kontakthalterung, eine in der Kontakthalterung befindliche Kontaktaufnahme und das in der Kontaktaufnahme angeordnete Kontaktelement vorgesehen.

Als "Verbindereinschub" ist eine Vorrichtung zu verstehen, welche in das Gehäuse eines Steckverbinders einbringbar ausgeführt ist und somit eingesetzt werden kann, um Leitung, Kontaktelement und Kontaktaufnahme vorab zu montieren, wodurch eine Endmontage des Steckverbinders und/oder des Gegensteckverbinders besonders vereinfacht wird.

Als "Distanzelement" ist grundsätzlich ein Bauteil gemeint, welches dazu ausgelegt ist, den Kontaktbereich, bestehend aus zumindest der Kontakthalterung und/oder der Kontaktaufnahme, von einem Gehäusedeckel in vorgesehenem Abstand zu befestigen, bzw. daran befestigt zu werden.

Eine "Kontaktaufnahme" ist vorzugsweise als Vorrichtung ausgeführt, welche ein Kontaktelement isolierend aufnimmt. Ein alternativer Begriff in vergleichbaren Anwendung wäre Isolierkörper.

Die dazugehörige "Kontakthalterung" ist als Vorrichtung zur Aufnahme der zumindest einen Kontaktaufnahme zu verstehen, welche die Kontaktaufnahme und somit die beinhaltenden Kontaktelemente in einer vorgesehenen Konstellation hält, sodass besagte Kontaktaufnahme in ein Gehäuse des Steckverbinders und/oder Gegensteckerbinders eingesetzt werden kann.

Eine geschickte Ausführungsform schlägt vor, dass zumindest eine der Befestigungsformen zur Aufnahme des Distanzelements eingesetzt ist.

Beispielhaft können zumindest zwei, vorzugsweise diagonal voneinander angeordneten Befestigungsformen zur Aufnahme je eines Distanzelements eingesetzt sind. Die beschriebene Ausführungsform sieht dabei offensichtlich den Einsatz eines möglichst flachen, im wesentlichen quaderförmigen Steckverbindersystems vor. Durch die Ausführungsform kann sowohl eine feste uns sichere Verbindung des Verbindereinschubs als auch eine sichere Montage des Steckverbinders, bzw. Gegensteckverbinders gewährleistet werden.

In einer cleveren Ausführungsform weist das Distanzelement zumindest eine Aufnahmeform auf, welche zur Aufnahme der Fixiervorrichtung ausgelegt ist. Als Aufnahmeform ist in einer einfachen Ausführungsform eine axial umlaufende Nut gemeint. Alternativ kann eine Öffnung oder eine Durchgangsöffnung vorgesehen sein. Die Öffnung oder Durchgangsöffnung kann mit einem Gewinde versehen sein. Weiterhin kann auch eine axial umlaufende Feder, Wulst oder vergleichbare nach außen weisende Form als Aufnahmeform vorgesehen sein.

Eine sinnvolle Ausführungsform eröffnet, dass das Fixierelement zumindest eine Öffnung aufweist, welche mit der Aufnahmeform des Distanzelements in Eingriff gebracht ist. In einer besonders einfachen Ausführung ist die Öffnung als in eine Nut eingreifende Feder ausgeführt. Vorzugsweise ist die Öffnung in etwa u-förmig ausgeführt, sodass in eine zumindest teilzylindrische Nut eingegriffen werden kann. Auch andere Öffnungsformen, beispielsweise c-förmig, v-förmig oder ähnliche Formen sind denkbar und möglicherweise sinnvoll. Besonders bevorzugt wird eine Öffnung als Durchgangsöffnung ausgeführt.

In einer trickreichen Ausführungsform wird die Fixiervorrichtung aus zumindest zwei, im wesentlichen identischen Fixierelementen und zumindest zwei, im wesentlichen identischen Klemmelementen gebildet, wobei die Fixierelemente und die Klemmelemente von zumindest einem Verbindungselement derart miteinander verbunden sind, das eine Leiteraufnahme des Klemmelements und eine Leiteraufnahme des Klemmelements einen Innenleiter klemmend zwischen sich aufnehmen. Geschickter Weise werden hier zwei Klemmelemente mit halbzylindrischen Ausnehmungen für den Innenleiter vorgesehen, welche von den Fixierelementen eingefasst und miteinander verklemmt/ verpresst werden. Zum Verklemmen/ Verpressen bietet sich in einfacher Weise ein Verbindungselement wie eine Schraube an. Die Schraube kann entweder in ein Gewinde, welches in einem Fixierelement vorgesehen ist, eingreifen, oder mit einer Mutter versehen sein, um die benötigte Klemmkraft/ Presskraft zu erzielen.

Eine weitere vorteilhafte Ausführungsform sieht vor, dass das Fixierelement durch die Öffnung schwenkbar an der Aufnahmeform angeordnet ist.

Schließlich sieht eine Ausführungsform vor, dass das Distanzelement aus zumindest zwei Distanzstücken gebildet ist, wobei zumindest eines der Distanzstücke eine Aufnahmeform aufweist. Auf diese Weise kann eine besonders vorteilhafte Verbindung von Fixierelement und Distanzelement erwirkt werden, in dem ein Distanzstück mit Aufnahmeform durch eine als Durchgangsöffnung ausgeführte Öffnung des Fixierelements gebracht wird. Anschließend wird das die Aufnahmeform aufweisende Distanzstück mit dem übrigen Distanzstück verbunden und als Distanzelement in dem Verbindereinschub eingesetzt.

Eine weiter Aufgabe der Erfindung wird gelöst durch ein elektrisches Steckverbindersystem zur Verbindung koaxialer Leiter, bestehend aus einem Steckverbinder und einem damit korrespondierenden Gegensteckverbinder, wobei der Steckverbinder ein Steckverbindergehäuse und der Gegensteckverbinder ein Gegensteckverbindergehäuse aufweist. Dabei weisen der Steckverbinder und der Gegensteckverbinder je zumindest eine Fixiervorrichtung zur Aufnahme eines abisolierten Innenleiters auf, wobei die Fixiervorrichtung im Inneren des Steckverbindergehäuses und des Gegensteckverbindergehäuses angeordnet sind.

Der Begriff "Steckverbindersystem" meint ein System bestehend aus zumindest dem Steckverbinder, welcher zum Anschluss an den Gegensteckverbinder vorgesehen ist. Das Steckverbindersystem ist bevorzugt dazu ausgelegt, eine hohe elektrische Stromstärke und/oder eine hohe elektrische Spannung zu übertragen. Ganz besonders bevorzugt ist das Steckverbindersystem für Fahrantriebe schienengebundener Fahrzeuge ausgeführt.

In cleverer Weise sieht eine Ausführungsform vor, dass der Steckverbinder und der Gegensteckverbinder je einen Verbindereinschub aufweisen, welcher aus zumindest einem Kontaktbereich, der Fixiervorrichtung und einem Gehäusedeckel gebildet werden.

Schließlich sieht eine Ausführungsform vor, dass der Verbindereinschub zumindest ein Distanzelement aufweist, welches den Gehäusedeckel, die Fixiervorrichtung und den Kontaktbereich voneinander beabstandet.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Steckverbindersystems;
- Fig. 2: eine perspektivische Darstellung eines Verbindereinschubs;
- Fig. 3: eine Explosionsdarstellung eines Verbindereinschubs.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

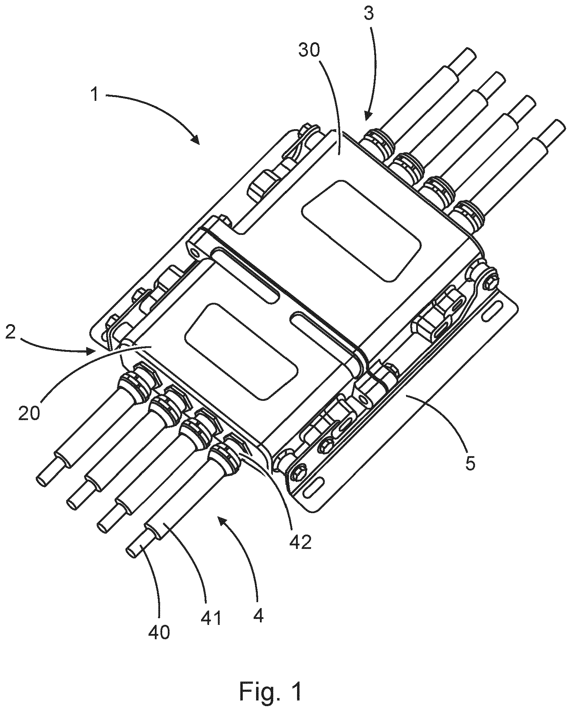

Die Figur 1 zeigt eine mögliche Ausführungsform eines erfindungsgemäßen Steckverbindersystems 1. Dabei werden zwei der wesentlichen Komponenten gezeigt, der Steckverbinder 2 und der damit gekoppelte Gegensteckverbinder 3. Hierbei werden im Sinne der Erfindung die Begriffe Steckverbinder 2 und Gegensteckverbinder 3 im Wesentlichen synonym verwendet und zur primär zur verbesserten Lesbarkeit entsprechend bezeichnet. Grundsätzlich können Eigenschaften des Steckverbinders 2 auch für den Gegensteckverbinder 3 zutreffen. Der Steckverbinder 2 des Steckverbindersystems 1 weist ein Steckverbindergehäuse 20 auf. Der Gegensteckverbinder 3 weist ein mit dem Steckverbindergehäuse 20 verbindbares Gegensteckverbindergehäuse 30 auf. Ein Steckverbinder 2 kann jedoch auch für sich stehend als Steckverbinder ausgeführt sein, welcher beispielsweise direkt die elektrische Verbindung zu einem elektrischen Verbraucher, insbesondere einem elektrischen Motor herstellt. Sowohl der Steckverbinder 2, als auch der Gegensteckverbinder 3 sind zur Verbindung von Leitungen 4 ausgelegt. Die Leitungen 4 sind dabei zumindest mit einem Innenleiter 40 verstehen und mit einem Mantel 41 umhüllt. Zur fremdmediendichten Verbindung der Leitungen 4 mit dem Steckverbinder 2 und dem Gegensteckverbinder 3 sind sowohl das Steckverbindergehäuse 20, als auch das Gegensteckverbindergehäuse 30 mit Leitungsbefestigungen 42 ausgestattet. In der Fig. 1 sind im Stand der Technik bekannte Kabelverschraubungen als Leitungsbefestigung 42 eingesetzt. Das Steckverbindergehäuses 20 kann mit dem Gegensteckverbindergehäuse 30 mit einer Montageschiene 5 in Ihrer Verbindung gesichert werden. Die Montageschiene 5 kann weiterhin zur Verbindung des Steckverbindersystems 1 mit einem Untergrund, beispielsweise einer Wandung, vorzugsweise einer Wandung eines schienengebundenen Fahrzeugs, genutzt werden.

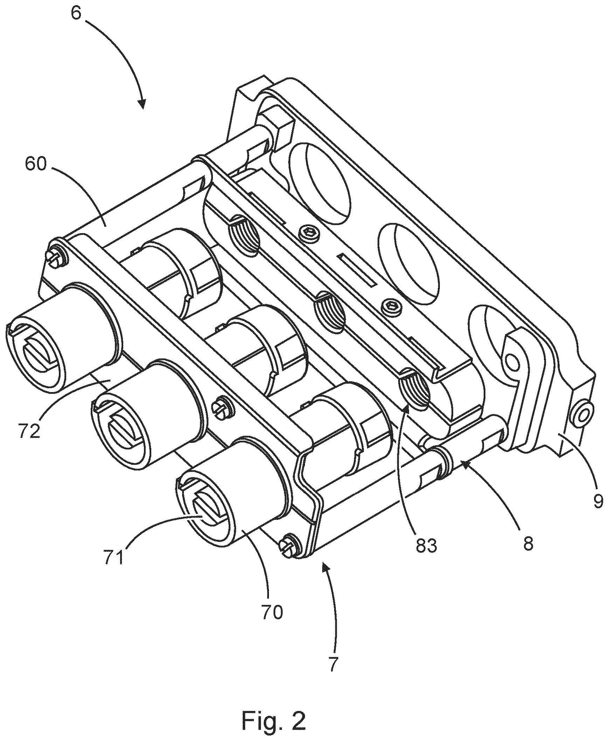

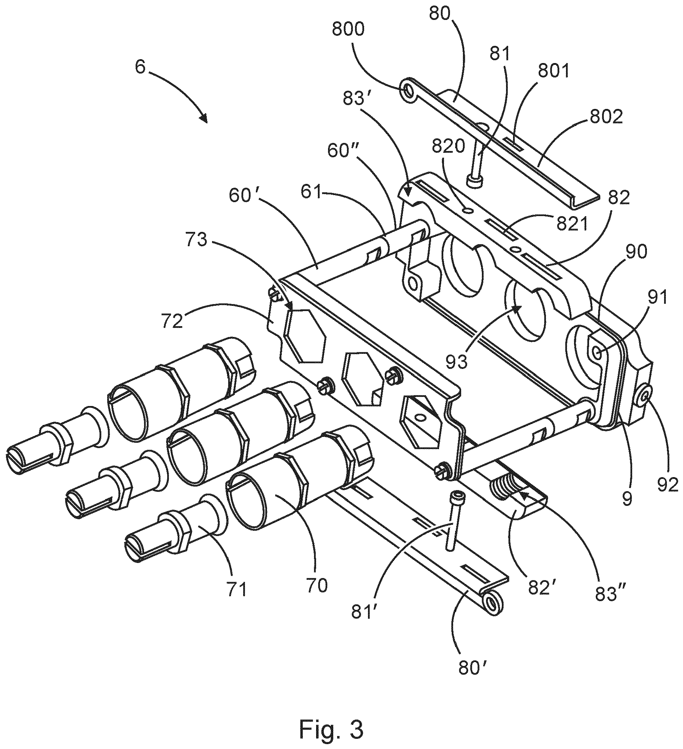

Figur 2 zeigt einen erfindungsgemäßen Verbindereinschub 6, welcher mit miteinander korrespondierenden Kontaktelementen 71 versehen sowohl in dem Steckverbindergehäuse 20, als auch in dem Gegensteckverbinder 30 eingesetzt wird. Durch die Kombination eines Verbindereinschubs 6 mit dem Steckverbindergehäuse 20 bildet den Steckverbinder 2. Durch die Kombination eines zweiten Verbindereinschubs 6 mit angepassten, zu den Kontakten des Steckverbinder 2 korrespondierenden Kontaktelementen 71 mit dem Gegensteckverbindergehäuse 30 bildet den Gegensteckverbinder 3. Der Verbindereinschub 6 weist im Wesentlichen einen Kontaktbereich 7 eine Fixiervorrichtung 8 und einen Gehäusedeckel 9 auf. Der Kontaktbereich 7 besteht dabei zumindest aus einer Kontaktaufnahme 70, wobei in die Kontaktaufnahme 70 zumindest ein Kontaktelement 71 eingebracht ist. Das Kontaktelement 71 ist in der dargestellten Ausführung als geschlitzter Stiftkontakt ausgeführt. Dem Fachmann ist klar, dass auch Lamellenkontakte, Buchsenkontakte, hermaphroditische Kontakte und weitere, denkbare Kontaktelemente eingesetzt werden können. Die Kontaktaufnahmen 70 werden von einer Kontakthalterung 72 gehalten. Die Kontakthalterung 72 kann zumindest zweiteilig ausgeführt sein. In der Darstellung der Figur 2 und Figur 3 ist die Kontakthalterung 72 sichtbar aus drei Bauteilen bestehend ausgeführt, welche miteinander verbunden sind. Diese Ausführungsform kann Vorteile für die Montage mit sich bringen. Dem Kontaktbereich 7 folgt, beabstandet von und in Verbindung mit stehend mit zumindest ein Distanzelement 60 eine Fixiervorrichtung 8. Gezeigt wird eine Ausführungsform, bei der zwei Distanzelemente 60 eingesetzt werden. Die Distanzelemente 60 sind dabei im Wesentlichen diagonal zueinander an dem etwa rechteckförmig ausgeführten Gehäusedeckel 9 angeordnet. Die Fixiervorrichtung 8 weist zumindest eine Leiteraufnahme 83 auf. Vorzugsweise ist die Leiteraufnahme 83 zur Aufnahme eines Innenleiters 40 einer Leitung 4 ausgelegt.

Die Figur 3 zeigt den in Figur 2 gezeigten Verbindereinschub 6 in einer Explosionsdarstellung. Dabei wird der Aufbau einiger Elemente deutlicher.

So wird schnell erkenntlich, dass der Kontaktbereich 7 neben der Kontaktaufnahme 70, dem darin angeordneten Kontaktelement 71 und der die Kontaktaufnahme 70 haltende Kontakthalterung 72 auch ein entsprechender Kontakteinlass 73 in der Kontaktaufnahme 70 vorgesehen ist. Das Distanzelement 60 ist aus zwei miteinander verbundenen Distanzstücken 62 und 62` gebildet und weist eine Aufnahmeform 61 auf. Besonders vorteilhaft wird eine bevorzugte Ausführungsform der erfindungsgemäßen Fixiervorrichtung 8 erkenntlich. Die Fixiervorrichtung 8 ist hierbei gebildet aus zwei Fixierelementen 80 und 80'. Zwischen den Fixierelementen 80 und 80' sind jeweils ein Klemmelement 82 und 82` angeordnet. Zwei Verbindungselemente 81 und 81' sind dazu vorgesehen, die vier zuvor genannten Bauteile miteinander zu verbinden. Da die Fixierelemente 80 und 80', sowie die Klemmelemente 82 und 82' identisch ausgeführt sind, wird folgend stellenweise nur eines der Elemente beschrieben. Das Fixierelement 80 weist eine Öffnung 800 auf, welche die Verbindung mit dem Distanzelement 61 ermöglicht. Drei Eingriffsformen 801 sind als schlitzartige Durchgangsöffnung gebildet. Zum Verklemmen der Klemmelemente 82 weist das Fixierelement 80 zwei Verbindungsöffnungen 802 auf. Die Verbindungsöffnungen 802 überlappen im montierten Zustand so weit mit Befestigungsöffnungen 820 des Klemmelements 82, dass das Verbindungselement 81 zumindest teilweise durch beide Öffnungen der Elemente hindurchgeführt werden kann. Die Darstellung zeigt eine besonders einfache Ausführungsform, in der Die Verbindungselemente 81 und 81` als Schraube mit angeordneter Mutter ausgeführt sind. Die Verbindungselemente 81 und 81' werden jeweils durch die Verbindungsöffnungen 802 und die Befestigungsöffnungen 820 geführt. Durch anschließendes Verschrauben von Mutter und Schraube können die Fixierelemente 80 und 80' eine Kraft auf die Klemmelemente 82 und 82` ausüben, sodass ein in der Leiteraufnahme 83 befindlicher Innenleiter 40 der Leitung 4 fixiert wird. Die in der Figur 2 gezeigte Leiteraufnahme 83 ist in der Figur 3 deutlich durch die Leiteraufnahme 83' und 83" der jeweiligen Klemmelemente 82 und 82` gebildet. Schließlich ist auch der Gehäusedeckel 9 deutlicher erkennbar. Der gezeigte Gehäusedeckel 9 weist ein umlaufendes Dichtelement 90 auf, welches im Montierten Zustand mit dem Steckverbindergehäuse 2 eine Abdichtung gegen Fremdmedien wie Staub, Schmutz und Fluiden bewirkt. In den abgerundeten Ecken des Gehäusedeckel 9 ist jeweils eine Befestigungsform 91 erkennbar. In zwei diagonal zueinander stehenden Befestigungsformen 91 sind mit den zwei gezeigten Distanzelementen 60, beziehungsweise dem kürzeren der gezeigten Distanzstücke 62` verbunden. Somit stehen die übrigen zwei Befestigungsformen 91 zur Verbindung des Gehäusedeckels 9 mit dem Steckverbindergehäuse 2 zur Verfügung. Zum Anschluss mit einer Montageschiene 5 weist die gezeigte Ausführungsform des Gehäusedeckels 9 noch eine Anschlussform 92 auf. Diese Anschlussform 92 kann außerdem denkbar für die Übertragung einer Masseanbindung oder eines elektromagnetischen Schirms genutzt werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden oder für sich einzeln eingesetzt werden.

### Bezugszeichenliste

- 1: Steckverbindersystem

- 2: Steckverbinder
- 20: Steckverbindergehäuse

- 3: Gegensteckverbinder
- 30: Gegensteckverbindergehäuse

- 4: Leitung
- 40: Innenleiter
- 41: Mantel
- 42: Leitungsbefestigung

- 5: Montageschiene

- 6: Verbindereinschub
- 60: Distanzelement
- 61: Aufnahmeform
- 62: Distanzstück

- 7: Kontaktbereich
- 70: Kontaktaufnahme
- 71: Kontaktelement
- 72: Kontakthalterung
- 73: Kontakteinlass

- 8: Fixiervorrichtung
- 80: Fixierelement
- 800: Öffnung
- 801: Eingriffsform
- 802: Verbindungsöffnung
- 81: Verbindungselement
- 82: Klemmelement
- 820: Befestigungsöffnung
- 821: Eingriffselement
- 83: Leiteraufnahme

- 9: Gehäusedeckel
- 90: Dichtelement
- 91: Befestigungsform
- 92: Anschlussform

## Patentansprüche

1. Elektrischer Steckverbinder (2) zur Aufnahme und Verbindung zumindest einer koaxialen Leitung (4) mit einem Gegensteckverbinder (3), wobei der Steckverbinder (2) ein Steckverbindergehäuse (20) und eine daran angeordnete Leitungsbefestigung (42) aufweist, wobei die Leitungsbefestigung (42) zur Abdichtung gegenüber Fremdmedien, sowie zur Befestigung der Leitung (4) mit einem Mantel (41) interagiert, wobei ein in dem Steckverbinder (2) angeordnetes Kontaktelement (71) mit einem Innenleiter (40) der Leitung (4) elektrisch leitend verbunden ist und wobei im Innenraum des Steckverbindergehäuses (20) ein Außenleiter der Leitung (4) mit dem Steckverbindergehäuse (20) elektrisch leitend verbunden ist,
**dadurch gekennzeichnet, dass**
der Innenleiter (40) im Innenraum des Steckverbindergehäuses (20) von zumindest einer Fixiervorrichtung (8) kraftschlüssig aufgenommen ist.

2. Elektrischer Steckverbinder (2) nach Anspruch 1
**dadurch gekennzeichnet, dass**
die Fixiervorrichtung (8) zumindest ein Fixierelement (80) und ein Klemmelement (82) aufweist und das Klemmelement (82) zumindest eine Leiteraufnahme (83) aufweist.

3. Elektrischer Steckverbinder (2) nach Anspruch 2
**dadurch gekennzeichnet, dass**
das Fixierelement (80) zumindest eine Eingriffsform (801) und das Klemmelement (82) zumindest ein Eingriffselement (821) aufweist, welche im montierten Zustand in Eingriff stehen.

4. Elektrischer Steckverbinder (2) nach Anspruch 1
**dadurch gekennzeichnet, dass**
das Steckverbindergehäuse (20) zumindest einen Gehäusedeckel (9) aufweist, welcher zur Aufnahme zumindest der Leitungsbefestigung (42) und zum Schutz des Steckverbinders (2) vor Eindringen von Fremdmedien mit zumindest einem Dichtelement (90) ausgeführt ist.

5. Elektrischer Steckverbinder (2) nach Anspruch 4
**dadurch gekennzeichnet, dass**
der Gehäusedeckel (9) mit zumindest vier Befestigungsformen (91) zur Befestigung mit dem Steckverbinder (2) und zumindest einer Durchgangsöffnung (93) ausgeführt ist, welche zur Aufnahme einer Leitungsbefestigung (42) ausgeführt ist.

6. Elektrischer Steckverbinder (2) nach Anspruch 4
**dadurch gekennzeichnet, dass**
der Gehäusedeckel (9) Teil eines Verbindereinschubs (6) ist, welcher weiterhin zumindest ein Distanzelement (60) und einen Kontaktbereich (7) aufweist.

7. Elektrischer Steckverbinder (2) nach Anspruch 6
**dadurch gekennzeichnet, dass**
zumindest eine der Befestigungsformen (91) zur Aufnahme des Distanzelements (60) eingesetzt ist.

8. Elektrischer Steckverbinder (2) nach Anspruch 6
**dadurch gekennzeichnet, dass**
das Distanzelement (60) zumindest eine Aufnahmeform (61) aufweist, welche zur Aufnahme der Fixiervorrichtung (8) ausgelegt ist.

9. Elektrischer Steckverbinder (2) nach Anspruch 3
**dadurch gekennzeichnet, dass**
das Fixierelement (80) zumindest eine Öffnung (800) aufweist, welche mit der Aufnahmeform (61) des Distanzelements (60) in Eingriff gebracht ist.

10. Elektrischer Steckverbinder (2) nach Anspruch 3
**dadurch gekennzeichnet, dass**
die Fixiervorrichtung (8) aus zumindest zwei, im wesentlichen identischen Fixierelementen (80, 80') und zumindest zwei, im wesentlichen identischen Klemmelementen (82, 82') gebildet wird, wobei die Fixierelemente (80, 80') und die Klemmelemente (82, 82') von zumindest einem Verbindungselement (81) derart miteinander verbunden sind, das eine Leiteraufnahme (83') des Klemmelements (80) und eine Leiteraufnahme (83") des Klemmelements (80') einen Innenleiter (40) klemmend zwischen sich aufnehmen.

11. Elektrischer Steckverbinder (2) nach Anspruch 9
**dadurch gekennzeichnet, dass**
das Fixierelement (80) durch die Öffnung (800) schwenkbar an der Aufnahmeform (61) angeordnet ist.

12. Elektrischer Steckverbinder (2) nach Anspruch 6
**dadurch gekennzeichnet, dass**
das Distanzelement (60) aus zumindest zwei Distanzstücken (62, 62') gebildet ist, wobei zumindest eines der Distanzstücke (62 oder 62') eine Aufnahmeform (61) aufweist.

13. Elektrischer Steckverbinder (2) nach Anspruch 6
**dadurch gekennzeichnet, dass**
der Kontaktbereich (7) eine Kontaktaufnahme (70), ein durch die Kontaktaufnahme (70) aufgenommenes Kontaktelement (71) und eine die Kontaktaufnahme (70) haltende Kontakthalterung (72) aufweist.

14. Elektrisches Steckverbindersystem (1) zur Verbindung koaxialer Leiter (4), bestehend aus einem Steckverbinder (2) und einem damit korrespondierenden Gegensteckverbinder (3), wobei der Steckverbinder (2) ein Steckverbindergehäuse (20) und der Gegensteckverbinder (3) ein Gegensteckverbindergehäuse (30) aufweist,
**dadurch gekennzeichnet, dass**
der Steckverbinder (2) und der Gegensteckverbinder (3) je zumindest eine Fixiervorrichtung (8) zur Aufnahme eines abisolierten Innenleiters aufweisen, wobei die Fixiervorrichtung (8) im Inneren des Steckverbindergehäuses (20) und des Gegensteckverbindergehäuses (30) angeordnet sind.

15. Elektrisches Steckverbindersystem (1) nach Anspruch 14
**dadurch gekennzeichnet, dass**
der Steckverbinder (2) und der Gegensteckverbinder (3) je einen Verbindereinschub (6) aufweisen, welcher aus zumindest einem Kontaktbereich (7), der Fixiervorrichtung (8) und einem Gehäusedeckel (9) gebildet werden.

16. Elektrisches Steckverbindersystem (1) nach Anspruch 15
**dadurch gekennzeichnet, dass**
der Verbindereinschub (6) zumindest ein Distanzelement (60) aufweist, welches den Gehäusedeckel (9), die Fixiervorrichtung (8) und den Kontaktbereich (7) voneinander beabstandet.
